# EUROPEAN PATENT APPLICATION

(11) **EP 3 075 230 A1**
(43) Date of publication of application: **05.10.2016**
(21) Application number: 16000746.4
(22) Date of filing: 30.03.2016
(51) Int. Cl.: A01G 7/04

(54) **PLANT GROWTH LIGHTING APPARATUS, PLANT HYDROPONIC CULTIVATION APPARATUS AND PLANT HYDROPONIC CULTIVATION METHOD**

(30) Priority: 31.03.2015 JP 2015072183
(71) Applicant: USHIO Denki Kabushiki Kaisha, Tokyo-to 100-8150 (JP)
(72) Inventor: Matsumoto, Akihisa, Hyogo, 679-2215 (JP); Matsuda, Mitsuhiro, Hyogo, 679-2215 (JP); Shibagaki, Ichiro, Hyogo, 679-2215 (JP); Kimura, Shuji, Hyogo, 660-8580 (JP); Koyama, Ryohei, Hyogo, 660-8580 (JP)
(74) Representative: Tomerius, Isabel

(57) **Abstract**

Disclosed are a plant growth lighting apparatus capable of forming a lighting region having a high degree of illuminance uniformity in the array direction of a light-emitting element array as well as a plant hydroponic cultivation apparatus and a plant hydroponic cultivation method capable of growing a plant with high growth efficiency even in a large cultivation region. A plurality of light-emitting element units, each including a first light-emitting element and a second light-emitting element having an emission peak wavelength different from that of the first light-emitting element, are arranged side by side along one direction to form a light-emitting element array. The light-emitting element unit is constituted by two second light-emitting elements disposed so as to be spaced apart from each other in the one direction and one first light-emitting element disposed between the two second light-emitting elements. A distance between first light-emitting elements in light-emitting element units adjacent to each other and positioned in an end part of the light-emitting element array is shorter than a distance between first light-emitting elements in light-emitting element units adjacent to each other and positioned in a central part of the light-emitting element array. A distance between two second light-emitting elements in a light-emitting element unit positioned in the end part is shorter than a distance between two second light-emitting elements in a light-emitting element unit positioned in the central part.

## Description

### TECHNICAL FIELD

The present invention relates to a plant growth lighting apparatus, a plant hydroponic cultivation apparatus and a plant hydroponic cultivation method.

### BACKGROUND ART

A plant hydroponic cultivation method has been proposed in the art as a type of plant cultivation methods for hydroponically cultivating plants in a plant factory while growing conditions such as nourishment, water, an artificial light source and temperature are completely controlled to be appropriate conditions. Plant growth lighting apparatuses, each including light-emitting elements such as LED elements as artificial light sources, have been proposed (see Patent Literatures 1 to 3, for example).

Specifically, Patent Literature 1 discloses a plant growth lighting apparatus, including two types of LED elements having different emission wavelengths, for emitting red light having a wavelength near 660 nm and blue light having a wavelength near 450 nm, which are effective for the photosynthesis of plants. In this plant growth lighting apparatus, a large number of the two types of LED elements (specifically, red LED elements and white LED elements) are arranged in a matrix in a rectangular region. Specifically, a red LED element array in which a plurality of red LED elements are arranged side by side in one direction and a white LED element array in which a plurality of white LED elements are arranged side by side in the one direction are disposed alternately at regular intervals along a direction (hereinafter, referred to also as an "element array perpendicular direction") perpendicular to the one direction in which the plurality of LED elements constituting the element array are arranged. In other words, the red LED elements and the white LED elements are alternately arranged at regular intervals along the element array perpendicular direction.

Patent Literature 2 discloses a rod-shaped plant growth lighting apparatus including two or more types of LED elements (specifically, red LED elements and blue LED elements, for example) having different emission wavelengths. In this plant growth lighting apparatus, a plurality of such LED elements are arranged side by side at regular intervals along one direction. When the plurality of LED elements are arranged linearly in this lighting apparatus, it is preferable that the two types of LED elements (the red LED elements and the blue LED elements) are arranged alternately. This yields uniform luminance distribution in the longitudinal direction of the plant growth lighting apparatus, i.e., the one direction along which the plurality of LED elements are arranged side by side. The two or more types of LED elements having different emission wavelengths are not limited to the combination of the red LED element and the blue LED element. Combinations of LED elements with various wavelength ranges are being tested.

Patent Literature 3 discloses an LED lighting apparatus in which when arranging a plurality of LED element arrays along a direction perpendicular to one direction in which a plurality of LED elements constituting one element array are arranged side by side, the LED element arrays are arranged at regular intervals or arranged so that the number of the LED element arrays are larger on an end side.

### CITATION LIST

### PATENT LITERATURE

Patent Literature 1: Japanese Patent Application Laid-Open No. 2012-239417
Patent Literature 2: Japanese Utility Model Registration No. 3180774
Patent Literature 3: Japanese Patent Application Laid-Open No. 2014-027922

### SUMMARY OF INVENTION

### Technical Problem

However, many researches made by the present inventors have revealed that the plant growth lighting apparatus including the plurality of LED elements arranged at regular intervals along one direction has various problems.

Specifically, illuminance in a central part of a lighting region of the plant growth lighting apparatus is higher than illuminance in end parts thereof in the array direction of the LED elements, thus failing to achieve sufficient uniformity in illuminance distribution in the array direction. If such a problem occurs, the grown states of plants grown by using such a plant growth lighting apparatus lack in uniformity.

When two types of LED elements having different emission wavelengths are alternately arranged, it is difficult, especially when the light-emitting element array is long, to make a ratio between the photosynthetic photon flux density of the first light-emitting elements and the photosynthetic photon flux density of the second light-emitting elements in emitted light from the plant growth lighting apparatus suitable for growing plants in the entire lighting region of the plant growth lighting apparatus. On these problems, the lighting apparatuses described in Patent Literatures 1 to 3 have made no considerations, when two types of light-emitting elements having different emission wavelengths are arranged alternately in one direction, for arrangement appropriate for the illuminance distribution and ratio of such light-emitting elements.

The present invention has been made in view of the foregoing circumstances and has as its obj ect the provision of a plant growth lighting apparatus capable of forming a lighting region having a high degree of illuminance uniformity in the array direction of a light-emitting element array.

The present invention has as another object the provision of a plant hydroponic cultivation apparatus and a plant hydroponic cultivation method capable of growing plants with high growth efficiency even in a large cultivation region. Solution to Problem

According to an aspect of the present invention, there is provided a plant growth lighting apparatus including a plurality of light-emitting element units, each including a first light-emitting element and a second light-emitting element having an emission peak wavelength different from that of the first light-emitting element, arranged side by side along one direction to form a light-emitting element array, wherein:
the light-emitting element unit is constituted by two second light-emitting elements disposed so as to be spaced apart from each other in the one direction and one first light-emitting element disposed between the two second light-emitting elements;
a distance between first light-emitting elements of light-emitting element units adjacent to each other in two or more light-emitting element units positioned in at least one of end parts of the light-emitting element array is shorter than a distance between first light-emitting elements of light-emitting element units adjacent to each other in two or more light-emitting element units positioned in a central part of the light-emitting element array; and
a distance between two second light-emitting elements in a light-emitting element unit positioned in the end part is shorter than a distance between two second light-emitting elements in a light-emitting element unit positioned in the central part.

In the plant growth lighting apparatus of the present invention, three or more light-emitting element units may preferably be positioned in at least one of the end parts of the light-emitting element array, and a distance between first light-emitting elements of light-emitting element units adjacent to each other in the three or more light-emitting element units may preferably decrease with increasing distance from the central part.

In the plant growth lighting apparatus of the present invention, three or more light-emitting element units may preferably be positioned in at least one of the end parts of the light-emitting element array, and a distance between two second light-emitting elements in the three or more light-emitting element units may preferably decrease with increasing distance from the central part.

In the plant growth lighting apparatus of the present invention, a controller for individually controlling a photosynthetic photon flux density of the first light-emitting element that constitutes the light-emitting element unit and a photosynthetic photon flux density of the second light-emitting element that constitutes the light-emitting element unit may preferably be provided.

According to another aspect of the present invention, there is provided a plant hydroponic cultivation apparatus employing the above-described plant growth lighting apparatus.

According to still another aspect of the present invention, there is provided a plant hydroponic cultivation method in which a plant is cultivated in the above-described plant hydroponic cultivation apparatus with a distance between the plant growth lighting apparatus and the plant kept within 15 cm.

### ADVANTAGEOUS EFFECTS OF INVENTION

In the plant growth lighting apparatus of the present invention, the light-emitting element array is constituted by the plurality of light-emitting element units each including one first light-emitting element and two second light-emitting elements that are alternately arranged side by side. Moreover, the distance between the first light-emitting elements of the light-emitting element units adjacent to each other and the distance between the two second light-emitting elements in at least one of the end parts of the light-emitting element array are shorter than the distance between the first light-emitting elements of the light-emitting element units adjacent to each other and the distance between the two second light-emitting elements in the central part of the light-emitting element array, respectively. This yields sufficient uniformity in illuminance distribution in the array direction of the light-emitting element array in the lighting region of the plant growth lighting apparatus. Moreover, a ratio between the photosynthetic photon flux density of red light and the photosynthetic photon flux density of blue light in emitted light from the plant growth lighting apparatus can be easily made suitable for growing plants in the entire lighting region of the plant growth lighting apparatus even when the light-emitting element array is long.

Thus, the plant growth lighting apparatus of the present invention allows for the formation of the lighting region having a high degree of illuminance uniformity in the array direction of the light-emitting element array. Consequently, plants can be grown with high growth efficiency in a large cultivation region as well.

The plant hydroponic cultivation apparatus of the present invention employs the plant growth lighting apparatus of the present invention. Since the lighting region having a high degree of illuminance uniformity in the array direction of the light-emitting element array is formed by the plant growth lighting apparatus, plants can be grown with high growth efficiency in a large cultivation region as well.

According to the plant hydroponic cultivation method of the present invention, a plant is cultivated in the plant hydroponic cultivation apparatus of the present invention with a distance between the plant growth lighting apparatus of the present invention and the plant kept within 15 cm. This allows for the formation of the lighting region having a high degree of illuminance uniformity in the array direction of the light-emitting element array by the plant growth lighting apparatus, the achievement of high optical energy use efficiency, and the elimination of adverse effects in the plant such as sunscald due to a thermal load.

Thus, according to the plant hydroponic cultivation method of the present invention, plants can be grown with high growth efficiency in a large cultivation region as well.

### BRIEF DESCRIPTION OF DRAWINGS

[FIG. 1] is an explanatory front view illustrating a plant growth lighting apparatus according to an embodiment of the present invention.
[FIG. 2] is an explanatory front view illustrating a plant growth lighting apparatus according to another embodiment of the present invention.
[FIG. 3] is an explanatory diagram illustrating a schematic configuration of a plant hydroponic cultivation apparatus used in Experimental Example 1.
[FIG. 4] is an explanatory diagram illustrating a state in Experimental Example 1 in which lettuce seedlings are planted in a cultivation panel disposed in a cultivation tank of the plant hydroponic cultivation apparatus in FIG. 3.

### DESCRIPTION OF EMBODIMENTS

Embodiments of a plant growth lighting apparatus according to the present invention will now be described below.

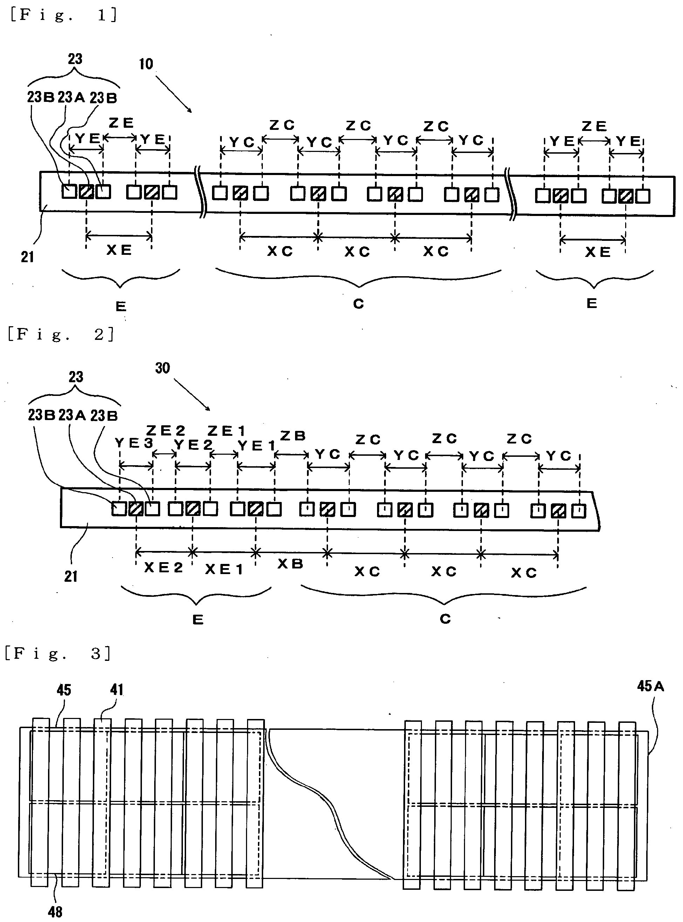

FIG. 1 is an explanatory front view illustrating a plant growth lighting apparatus according to an embodiment of the present invention.

The plant growth lighting apparatus 10 includes a plurality of light-emitting element units 23 (there are 22 such units in the example of FIG. 1, and only eight of those are illustrated) in a rectangular frame (not shown). The light-emitting element unit 23 contains, as a first light-emitting element, a blue light-emitting element 23A having an emission peak wavelength of not longer than 500 nm and contains, as a second light-emitting element, a red light-emitting element 23B having an emission peak wavelength of not shorter than 600 nm. In the plant growth lighting apparatus 10, the plurality of light-emitting element units 23 are disposed side by side along one direction of a long rectangular substrate 21, i.e., the longitudinal direction thereof. A linear light-emitting element array is thus formed by the plurality of light-emitting element units 23 on the substrate 21. Such a light-emitting element array forms a light-emitting region.

In the example of FIG. 1, the total length of the substrate 21 is 1, 107 mm, and the total length of the light-emitting region, i.e., the total length of the light-emitting element array is 1,076 mm.

In the plant growth lighting apparatus 10, the substrate 21 is formed by depositing an insulating film with a wiring pattern on a surface of a long rectangular plate-shaped base made of aluminum, for example.

The plurality of light-emitting element units 23 are each constituted by one blue light-emitting element 23A and two red light-emitting elements 23B. In such a light-emitting element unit 23, the two red light-emitting elements 23B are disposed so as to be spaced apart from each other in the one direction along which the plurality of light-emitting element units 23 are arranged side by side, i.e., the longitudinal direction of the substrate 21. The blue light-emitting element 23A is disposed between the two red light-emitting elements 23B. In this manner, the plurality of red light-emitting elements 23B (there are 44 such elements in the example of FIG. 1, and only 16 of those are illustrated) and the plurality of blue light-emitting elements 23A (there are 22 such elements in the example of FIG. 1, and only eight of those are illustrated) are arranged side by side on the substrate 21 in the longitudinal direction of the substrate 21 with a quantity ratio (red light-emitting element : blue light-emitting element) of 2:1. In FIG. 1, the blue light-emitting elements 23A, among the blue light-emitting elements 23A and the red light-emitting elements 23B, are hatched with oblique lines.

In the example of FIG.1, the 44 red light-emitting elements 23B are divided into four red light-emitting element serial connection units. In such a red light-emitting element serial connection unit, 11 red light-emitting elements 23B are serially connected. The four red light-emitting element serial connection units are connected in parallel and then electrically connected to a lighting circuit (not shown) connected to a power source. The 22 blue light-emitting elements 23A, on the other hand, are divided into two blue light-emitting element serial connection units. In such a blue light-emitting element serial connection unit, 11 blue light-emitting elements 23A are serially connected. The two blue light-emitting element serial connection units are connected in parallel and then electrically connected to the lighting circuit (not shown) connected to the power source.

In the light-emitting element array, a distance between the blue light-emitting elements 23A in the light-emitting element units 23 adjacent to each other (hereinafter, referred to also as a "blue light-emitting element interval distance") differs between a central part C where two or more light-emitting element units are positioned and at least one of end parts E positioned at both ends of the central part C, where two or more light-emitting element units are positioned.

Specifically, the plurality of light-emitting element units 23 that constitute the light-emitting element array are disposed so that a blue light-emitting element interval distance XE in the end part E is shorter than a blue light-emitting element interval distance XC in the central part C.

In the example of FIG. 1, the two end parts E have the same configuration. Each end part E includes two light-emitting element units 23. All of the blue light-emitting element interval distances XE in the two end parts E are the same. In other words, all of the blue light-emitting elements are disposed at regular intervals in the two end parts E.

In the central part C, on the other hand, 18 light-emitting element units are positioned, and only four light-emitting element units 23 of those are illustrated in FIG. 1. All of the blue light-emitting element interval distances XC in the central part C are the same. In other words, all of the blue light-emitting elements 23A are disposed at regular intervals in the central part C.

A blue light-emitting element interval distance between the light-emitting element unit 23 positioned in the central part C and the light-emitting element unit 23 positioned in the end part E, which are adjacent to each other, is longer than the blue light-emitting element interval distance XE in the end part E and shorter than the blue light-emitting element interval distance XC in the central part C.

The blue light-emitting element interval distance XE in the end part E is preferably not more than 93% of the blue light-emitting element interval distance XC in the central part C, more preferably not more than 89% thereof.

In the light-emitting element array, as shown in FIG. 1, a distance ZE between the light-emitting element units 23 adjacent to each other in the end part E is preferably shorter than a distance ZC between the light-emitting element units 23 adjacent to each other in the central part C. In other words, the distance ZE between the red light-emitting elements 23B adjacent to each other in the end part E is preferably shorter than the distance ZC between the red light-emitting elements 23B adjacent to each other in the central part C.

The distance ZE between the light-emitting element units 23 in the end part E is preferably not more than 84% of the distance ZC between the light-emitting element units 23 in the central part C, more preferably not more than 81% thereof.

In the example of FIG. 1, the distances ZE between the light-emitting element units 23 in the two end parts E are the same. Moreover, all of the distances ZC among the plurality of light-emitting element units 23 in the central part C are the same.

A distance between the light-emitting element unit 23 positioned in the central part C and the light-emitting element unit 23 positioned in the end part E, which are adjacent to each other, is longer than the distance ZE between the light-emitting element units 23 in the end part E and shorter than the distance ZC between the light-emitting element units 23 in the central part C.

In the plurality of light-emitting element units 23 that constitute the light-emitting element array, a distance between the two red light-emitting elements 23B in the light-emitting element unit 23 (hereinafter, referred to also as a "red light-emitting element interval distance") differs between the central part C and the end part E.

Specifically, a red light-emitting element interval distance YE of the light-emitting element unit 23 positioned in the end part E is shorter than a red light-emitting element interval distance YC of the light-emitting element unit 23 positioned in the central part C.

In the example of FIG. 1, regarding a plurality of red light-emitting element interval distances YE in the end part E, the red light-emitting element interval distance YE closer to the central part C is 20 mm and the red light-emitting element interval distance YE closer to an edge of the substrate 21 is 22 mm. In contrast, all of the red light-emitting element interval distances YC in the central part C are the same.

The blue light-emitting element 23A and the red light-emitting elements 23B in each of the light-emitting element units 23 are disposed at regular intervals.

The red light-emitting element interval distance YE in the end part E is preferably not more than 88% of the red light-emitting element interval distance YC in the central part C, more preferably not more than 85% thereof.

As an example of the blue light-emitting element 23A, may be mentioned a blue LED element. As an example of the blue LED element, may be mentioned a blue LED element obtained by crystal growing a quaternary optical semiconductor material formed of a nitride of indium (In), gallium (Ga) and aluminum (Al) on a substrate made of sapphire or gallium nitride (GaN). The peak wavelength of light from the blue LED element is 420 to 470 nm, for example.

In the example of FIG. 1, blue LED elements are employed as the blue light-emitting elements 23A. A lens layer (not shown), made of a transparent resin and having a flat light emission face, is provided in such a blue LED element so as to cover a surface thereof.

As an example of the red light-emitting element 23B, may be mentioned a red LED element. As an example of the red LED element, may be mentioned a red LED element obtained by crystal growing a quaternary optical semiconductor material formed of a phosphide of aluminum (Al), gallium (Ga) and indium (In) on a substrate made of gallium arsenide (GaAs). The peak wavelength of light from the red LED element is 640 to 680 nm, for example.

In the example of FIG. 1, red LED elements are employed as the red light-emitting elements 23B. A lens layer (not shown), made of a transparent resin and having a flat light emission face, is provided in such a red LED element so as to cover a surface thereof.

In the plant growth lighting apparatus 10, the blue light-emitting element 23A and the red light-emitting element 23B preferably have the same photon flux density.

When the blue light-emitting element 23A and the red light-emitting element 23B have the same photon flux density, emitted light from the plant growth lighting apparatus 10 becomes light suitable for growing plants.

Specifically, when the blue light-emitting element 23A and the red light-emitting element 23B have the same photon flux density, a ratio between the photosynthetic photon flux density of red light and the photosynthetic photon flux density of blue light in the emitted light from the plant growth lighting apparatus 10 is 2:1 on the basis that the quantity ratio of these light-emitting elements (red light-emitting element : blue light-emitting element) is 2:1.

Note that such a ratio between the photosynthetic photon flux density of red light and the photosynthetic photon flux density of blue light has a range considered to be preferable in growing a plant. Specific optimum ratios are being tested for various plants. In general, the ratio between the photosynthetic photon flux density of red light and the photosynthetic photon flux density of blue light is preferably 3:2 to 9:1.

The plant growth lighting apparatus 10 may include a controller for performing light control by separately controlling the photosynthetic photon flux density of red light and the photosynthetic photon flux density of blue light according to a plant to be grown. The controller can also individually adjust the photosynthetic photon flux densities of red light and blue light by individually controlling the outputs of the red light-emitting element 23B and the blue light-emitting element 23A.

In the plant growth lighting apparatus 10, the plurality of blue light-emitting element interval distances XE in the end parts E are set so as to be shorter than the plurality of blue light-emitting element interval distances XC in the central part C, and the plurality of red light-emitting element interval distances YE in the end parts E are set so as to be shorter than the plurality of red light-emitting element interval distances YC in the central part C. Thus, the provision of the controller can yield uniformity in illuminance distribution in an end part (portion corresponding to the end part E) and a central part (portion corresponding to the central part C) in a lighting region of the plant growth lighting apparatus 10. Additionally, the provision of the controller easily allows a ratio between the photosynthetic photon flux density of red light and the photosynthetic photon flux density of blue light to be adjusted to a preferred ratio in the entire lighting region.

Such a plant growth lighting apparatus 10 is disposed so that the blue light-emitting elements 23A and the red light-emitting elements 23B are opposed to a cultivation region above the cultivation region (specifically, at the height of 20 cm from the cultivation region, for example) where plants to be grown, for example, leaf vegetables such as leaf lettuce, lettuce, Japanese mustard spinach, spinach and parsley, are being cultivated. In the plant growth lighting apparatus 10 above the cultivation region, a direct current is supplied to each of the plurality of blue light-emitting elements 23A and the plurality of red light-emitting elements 23B to light these light-emitting elements all together, thereby irradiating the cultivation region with light.

In the plant growth lighting apparatus 10, the linear light-emitting element array is constituted by the plurality of light-emitting element units 23 each including one blue light-emitting element 23A and two red light-emitting elements 23B which are alternately arranged side by side. Moreover, the blue light-emitting element interval distance XE and the red light-emitting element interval distance YE in the both end parts E of the light-emitting element array are shorter than the blue light-emitting element interval distance XC and the red light-emitting element interval distance YC in the central part C, respectively. This yields sufficient uniformity in illuminance distribution in the array direction of the light-emitting element array in the lighting region of the plant growth lighting apparatus 10. Moreover, by simply employing the blue light-emitting element 23A and the red light-emitting element 23B having the same photon flux density and by supplying a direct current with the same current value to all of the light-emitting elements, a ratio between the photosynthetic photon flux density of red light and the photosynthetic photon flux density of blue light in emitted light from the plant growth lighting apparatus 10 can be made suitable for growing plants in the entire lighting region of the plant growth lighting apparatus 10 even when the light-emitting element array is long.

Thus, the plant growth lighting apparatus 10 allows for the formation of the lighting region having a high degree of illuminance uniformity in the array direction of the light-emitting element array. Consequently, plants can be grown with high growth efficiency in a large cultivation region as well.

Moreover, the plant growth lighting apparatus 10 can be disposed closer to plants. Therefore, emitted light from such a plant growth lighting apparatus 10 can be utilized efficiently to grow plants with high growth efficiency.

Specifically, the plant growth lighting apparatus 10 may be used, for example, with a distance between the plant growth lighting apparatus 10 and plants kept within 15 cm, preferably within 10 cm, more preferably within 5 cm.

A reason why the plant growth lighting apparatus 10 can be disposed near plants will now be described specifically. As a distance from an artificial light source (lighting apparatus) to plants increases, an effective photon quantity per unit area decreases, thus deteriorating energy efficiency. If the artificial light source (lighting apparatus) and the plants are too close to each other, however, a problem such as sunscald is more likely to occur due to a thermal load on the plants. Since light-emitting elements such as LED elements are employed as a light-emitting source in the plant growth lighting apparatus 10, heat generation from a light-emitting face of such a plant growth lighting apparatus 10 is small. This allows the plant growth lighting apparatus 10 to be disposed closer to plants.

FIG. 2 is an explanatory front view illustrating a plant growth lighting apparatus according to another embodiment of the present invention.

The plant growth lighting apparatus 30 has a configuration essentially similar to the plant growth lighting apparatus 10 of FIG. 1 except that three or more light-emitting element units 23 are positioned in each of two end parts E and blue light-emitting element interval distances and red light-emitting element interval distances in each end part E are all different from one another.

In the plant growth lighting apparatus 30, each of the plurality of light-emitting element units 23 is constituted by two red light-emitting elements 23B disposed so as to be spaced apart from each other and a blue light-emitting element 23A disposed between the two red light-emitting elements as with the light-emitting element unit 23 in the plant growth lighting apparatus 10 of FIG. 1. Moreover, the red light-emitting elements 23B, the blue light-emitting elements 23A and a substrate 21 in the plant growth lighting apparatus 30 are similar to the red light-emitting elements 23B, the blue light-emitting elements 23A and the substrate 21 in the plant growth lighting apparatus 10 of FIG. 1.

In the example of FIG. 2, 22 light-emitting element units 23, i.e., 44 red light-emitting elements 23B and 22 blue light-emitting elements 23A, are arranged on the substrate 21 side by side in the longitudinal direction of the substrate 21. The two end parts E have the same configuration in the light-emitting element array constituted by these light-emitting element units 23, and three light-emitting element units 23 are positioned in each end part E. FIG. 2 illustrates only one of the two end parts E, and the blue light-emitting elements 23A, among the blue light-emitting elements 23A and the red light-emitting elements 23B, are hatched with oblique lines. Moreover, 16 light-emitting element units 23 are positioned in a central part C, and only four light-emitting element units 23 of those are illustrated in FIG. 2. Furthermore, the total length of the substrate 21 is 1,165 mm, and the total length of the light-emitting region, i.e., the total length of the light-emitting element array is 1,076 mm.

In the end part E where the three or more light-emitting element units 23 are positioned, the blue light-emitting element interval distances XE1 and XE2 preferably decrease with increasing distance from the central part C as shown in FIG. 2 from the viewpoint of, for example, uniformity in illuminance distribution in the array direction of the light-emitting element array in an irradiation region.

Specifically, in FIG. 2, the three light-emitting element units 23 positioned in the end part E are disposed so that the blue light-emitting element interval distance XE2 closer to one edge (left side in FIG. 2) in the longitudinal direction of the substrate 21 is shorter than the blue light-emitting element interval distance XE1 closer to the central part C.

Regarding the blue light-emitting element interval distances in one light-emitting element unit 23 and its adjacent two light-emitting element units 23 (specifically, the blue light-emitting element interval distance XE1 and the blue light-emitting element interval distance XE2, for example) in the end part E, the blue light-emitting element interval distance (specifically, the blue light-emitting element interval distance XE2, for example) closer to one edge (left side in FIG. 2) in the longitudinal direction of the substrate 21 is preferably not more than 95% of the blue light-emitting element interval distance (specifically, the blue light-emitting element interval distance XE1, for example) closer to the central part C, more preferably not more than 92% thereof.

In the example of FIG. 2, the blue light-emitting element interval distance XE1 is 46 mm, and the blue light-emitting element interval distance XE2 is 42 mm.

In the end part E where the three or more light-emitting element units 23 are positioned, the red light-emitting element interval distances YE1, YE2 and YE3 in the three or more light-emitting element units 23 preferably decrease with increasing distance from the central part C as shown in FIG. 2 from the viewpoint of uniformity in illuminance distribution in the array direction of the light-emitting element array in the irradiation region.

Specifically, in FIG. 2, the three light-emitting element units 23 positioned in the end part E are disposed so that the red light-emitting element interval distance YE3 closer to one edge (left side in FIG. 2) in the longitudinal direction of the substrate 21 is the shortest and the red light-emitting element interval distance YE1 closer to the central part C is the longest.

Regarding the red light-emitting element interval distance in one light-emitting element unit 23 and the red light-emitting element interval distance in the light-emitting element unit 23 adjacent to the one light-emitting element unit 23 in the end part E, the red light-emitting element interval distance closer to one edge (left side in FIG. 2) in the longitudinal direction of the substrate 21 is preferably not more than 95% of the red light-emitting element interval distance closer to the central part C, more preferably not more than 92% thereof.

In the example of FIG. 2, the red light-emitting element interval distance YE1 is 24 mm, the red light-emitting element interval distance YE2 is 22 mm, and the red light-emitting element interval distance YE3 is 20 mm.

Moreover, in the end part E where the three or more light-emitting element units are positioned, distances ZE1 and ZE2 among the three or more light-emitting element units 23 preferably decrease with increasing distance from the central part C as shown in FIG. 2.

Regarding distances between one light-emitting element unit 23 and its adjacent two light-emitting element units 23 (specifically, the distance ZE1 between the light-emitting element units and the distance ZE2 between the light-emitting element units, for example) in the end part E, the distance between the light-emitting element units 23 (specifically, the distance ZE2 between the light-emitting element units 23, for example) closer to one edge (left side in FIG. 2) in the longitudinal direction of the substrate 21 is preferably not more than 95% of the distance between the light-emitting element units 23 (specifically, the distance ZE1 between the light-emitting element units 23, for example) closer to the central part C, more preferably not more than 92% thereof.

In the example of FIG. 2, the distance ZE1 between the light-emitting element units is 23 mm, and the distance ZE2 between the light-emitting element units is 21 mm.

In the plurality of light-emitting element units 23 that constitute the light-emitting element array, the blue light-emitting element interval distances (specifically, the blue light-emitting element interval distances XE1 and XE2) in the end part E are shorter than the blue light-emitting element interval distance XC in the central part C.

The longest blue light-emitting element interval distance (specifically, the blue light-emitting element interval distance XE1) in the end part E is preferably not more than 92% of the blue light-emitting element interval distance XC in the central part C, more preferably not more than 89% thereof.

In the example of FIG. 2, the blue light-emitting element interval distance XC in the central part C is 52 mm.

A blue light-emitting element interval distance XB between the light-emitting element unit 23 positioned in the central part C and the light-emitting element unit 23 positioned in the end part E, which are adjacent to each other, is 50 mm. The blue light-emitting element interval distance XB is longer than the longest blue light-emitting element interval distance XE1 (46 mm) in the end part E and shorter than the blue light-emitting element interval distance XC (52 mm) in the central part C.

In the light-emitting element array, the distances between the light-emitting element units 23 adjacent to each other (specifically, the distances ZE1 and ZE2 between the light-emitting element units) in the end part E are preferably shorter than the distance ZC between the light-emitting element units 23 adjacent to each other in the central part C.

The longest distance between the light-emitting element units 23 in the end part E (specifically, the distance ZE1 between the light-emitting element units) is preferably not more than 92% of the distance ZC between the light-emitting element units 23 in the central part C, more preferably not more than 89% thereof.

In the example of FIG. 2, the distance ZC between the light-emitting element units 23 in the central part C is 26 mm.

A distance ZB between the light-emitting element unit 23 positioned in the central part C and the light-emitting element unit 23 positioned in the end part E, which are adjacent to each other, is 25 mm. The distance ZB is longer than the longest distance ZE1 (23 mm) between the light-emitting element units 23 in the end part E and shorter than the distance ZC (26 mm) between the light-emitting element units 23 in the central part C.

In the plurality of light-emitting element units 23 that constitute the light-emitting element array, the red light-emitting element interval distances (specifically, the red light-emitting element interval distances YE1, YE2 and YE3) in the light-emitting element units 23 in the end part E are shorter than the red light-emitting element interval distance YC in the central part C.

The longest red light-emitting element interval distance (specifically, the red light-emitting element interval distance YE1) in the end part E is preferably not more than 96% of the red light-emitting element interval distance YC in the central part C, more preferably not more than 93% thereof.

In the example of FIG. 2, the red light-emitting element interval distance YC in the central part C is 26 mm.

The blue light-emitting element 23A and the two red light-emitting elements 23B in each of the light-emitting element units 23 are disposed at regular intervals.

Such a plant growth lighting apparatus 30 is disposed so that the blue light-emitting elements 23A and the red light-emitting elements 23B are opposed to a cultivation region above the cultivation region (specifically, at the height of 20 cm from the cultivation region, for example) where plants to be grown, for example, leaf vegetables such as leaf lettuce, lettuce, Japanese mustard spinach, spinach and parsley, are being cultivated. In the plant growth lighting apparatus 30 above the cultivation region, a direct current having the same current value is supplied to each of the plurality of blue light-emitting elements 23A and the plurality of red light-emitting elements 23B to light these light-emitting elements all together, thereby irradiating the cultivation region with light.

In the plant growth lighting apparatus 30, the linear light-emitting element array is constituted by the plurality of light-emitting element units 23 each including one blue light-emitting element 23A and two red light-emitting elements 23B which are alternately arranged side by side. Moreover, the blue light-emitting element interval distances XE1 and XE2 and the red light-emitting element interval distances YE1, YE2 and YE3 in the both end parts E of the light-emitting element array are shorter than the blue light-emitting element interval distance XC and the red light-emitting element interval distance YC in the central part C, respectively. Additionally, the blue light-emitting element interval distances XE1 and XE2 and the red light-emitting element interval distances YE1, YE2 and YE3 in the end part E decrease with increasing distance from the central part C. This yields a higher degree of uniformity in illuminance distribution in the array direction of the light-emitting element array in the lighting region of the plant growth lighting apparatus 30. Moreover, by simply employing the blue light-emitting element 23A and the red light-emitting element 23B having the same photon flux density and by supplying a direct current with the same current value to all of the light-emitting elements, a ratio between the photosynthetic photon flux density of red light and the photosynthetic photon flux density of blue light in emitted light from the plant growth lighting apparatus 30 can be made suitable for growing plants in the entire lighting region of the plant growth lighting apparatus 30 even when the light-emitting element array is long.

Thus, the plant growth lighting apparatus 30 allows for the formation of the lighting region having a high degree of illuminance uniformity in the array direction of the light-emitting element array. Consequently, plants can be grown with high growth efficiency in a large cultivation region having a width of 960 mm as well.

Moreover, light-emitting elements such as LED elements are employed as a light-emitting source in the plant growth lighting apparatus 30, and the plant growth lighting apparatus 30 can thus be disposed closer to plants. Therefore, emitted light from such a plant growth lighting apparatus 30 can be utilized efficiently to grow plants with high growth efficiency.

Specifically, the plant growth lighting apparatus 30 may be used, for example, with a distance between the plant growth lighting apparatus 30 and plants kept within 15 cm, preferably within 10 cm, more preferably within 5 cm.

The plant growth lighting apparatus of the present invention as described above can be used preferably as an artificial light source for a plant hydroponic cultivation apparatus.

According to the plant hydroponic cultivation apparatus of the present invention employing the plant growth lighting apparatus of the present invention, the lighting region having a high degree of illuminance uniformity in the array direction of the light-emitting element array can be formed by the plant growth lighting apparatus. Consequently, plants can be grown with high growth efficiency in a large cultivation region as well.

As an example of the configuration of the plant hydroponic cultivation apparatus of the present invention, may be mentioned a configuration in which a plurality of plant growth lighting apparatuses of the present invention are arranged side by side in a direction perpendicular to the longitudinal direction of the plant growth lighting apparatus (the array direction of the light-emitting element array) above a cultivation tank for cultivating plants (see FIG. 3).

In the plant hydroponic cultivation apparatus including the plant growth lighting apparatuses of the present invention, plants can be cultivated according to a plant hydroponic cultivation method of the present invention by cultivating the plants with a distance between the plant growth lighting apparatuses and the plants kept within 15 cm. The plant hydroponic cultivation method of the present invention allows for the formation of the lighting region having a high degree of illuminance uniformity in the array direction of the light-emitting element array by the plant growth lighting apparatus, the achievement of high optical energy use efficiency, and the elimination of adverse effects in the plants such as sunscald due to a thermal load.

Thus, according to the plant hydroponic cultivation method of the present invention, plants can be grown with high growth efficiency in a large cultivation region as well.

In the plant hydroponic cultivation method of the present invention, while a distance between the plant growth lighting apparatuses and plants is set within 15 cm from the viewpoint of optical energy use efficiency, within 10 cm is preferred and within 5 cm is more preferred.

The present invention is not limited to the above-described embodiments and various modifications are possible.

For example, light-emitting elements having different emission wavelengths may be employed, if needed, as the light-emitting elements that constitute the plant growth lighting apparatus. Specifically, the first light-emitting element and the second light-emitting element are not limited to the combination of the blue light-emitting element having an emission peak wavelength of not longer than 500 nm and the red light-emitting element having an emission peak wavelength of not shorter than 600 nm.

Alternatively, the blue light-emitting element and the red light-emitting element may have emission densities (photon flux densities) different from each other in the plant growth lighting apparatus.

From the viewpoint of illuminance uniformity in the array direction of the light-emitting element array, it is preferable in the plant growth lighting apparatus that the blue light-emitting element interval distance and the red light-emitting element interval distance in the both end parts of the light-emitting element array are shorter than the blue light-emitting element interval distance and the red light-emitting element interval distance in the central part C, respectively. However, only one of the end parts may satisfy such a condition.

An experimental example of the present invention will now be described below.

Experimental Example 1:
A plurality of plant growth lighting apparatuses (hereinafter, referred to also as "lighting apparatuses (1)") were produced according to the configuration of FIG. 2.

In the produced lighting apparatuses (1), a blue LED element having a peak wavelength of 420 to 470 nm was employed as the blue light-emitting element (23A), and a red LED element having a peak wavelength of 640 to 680 nm was employed as the red light-emitting element (23B). These blue LED element and red LED element had the same photon flux density.

A plurality of plant growth lighting apparatuses for comparison (hereinafter, referred to also as "comparison lighting apparatuses (1)"), each having a configuration similar to the lighting apparatus (1) were produced except that all light-emitting elements constituting 22 light-emitting element units in the lighting apparatus (1) were disposed at regular intervals.

In the produced comparison lighting apparatuses (1), the total length of the light-emitting region (the total length of the light-emitting element array) is 1, 076 mm as with the lighting apparatus (1).

The produced lighting apparatus (1) and comparison lighting apparatus (1) were used to produce plant hydroponic cultivation apparatuses (hereinafter, referred to also as a "hydroponic cultivation apparatus (1)" and a "comparison hydroponic cultivation apparatus (1)") as shown in FIG. 3, respectively.

As shown in FIG. 3, in each of the hydroponic cultivation apparatus (1) and the comparison hydroponic cultivation apparatus (1), a plurality of lighting apparatuses 41 were arranged, above a long cultivation tank 45 having a width (length of a short side 45A) of 960 mm, side by side at regular intervals in parallel with the short side 45A of the cultivation tank 45. In the hydroponic cultivation apparatus (1) and the comparison hydroponic cultivation apparatus (1), the plurality of lighting apparatuses 41 were disposed so that the height thereof from the cultivation tank 45 can be adjusted.

As shown in FIG. 3, in each of the hydroponic cultivation apparatus (1) and the comparison hydroponic cultivation apparatus (1), a cultivation panel 48 of 480 mm in length x 480 mm in width was disposed along the short side 45A and a long side 45B in the cultivation tank 45.

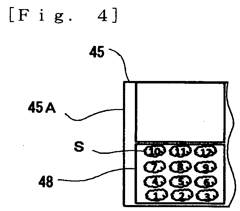

Thereafter, 12 lettuce seedlings S, uniformly sprouted separately in a seedling raising bed, were planted in the cultivation panel 48 at regular intervals of four rows vertically x three rows horizontally along the long side 45B as shown in FIG. 4. The height of the lighting apparatus 41 from the cultivation panel 48 was set to 15 cm. The light-emitting elements were lighted all together to start the cultivation of the lettuces. On the 21st day of such cultivation, the height of the lighting apparatus 41 from the cultivation panel 48 was changed to 20 cm. On the 36th day of such cultivation, the lettuces were harvested. The cultivation conditions during the cultivation period of 36 days had irradiation time with a cycle of a light period of 14 hours/a dark period of 10 hours. The cultivation room temperature was 20°C, and the carbon dioxide concentration in the room was 1,000 to 1,500 ppm. An aqueous solution, prepared by adjusting the concentration of a nutrient solution having the ingredient composition shown in the following Table 1 so that the electrical conductivity EC thereof equals 1. 8 mS/cm, was used as a hydroponic cultivation medium.

Here, the hydroponic cultivation apparatus (1) performed four repetitions of the above cultivation whereas the comparison hydroponic cultivation apparatus (1) performed the above cultivation without repetitions.

**[Table 1]**

| INGREDIENTS | CONTENT (ppm) |
|---|---|
| TOTAL NITROGEN | 245 |
| AMMONIA NITROGEN (OF TOTAL NITROGEN) | 8 |
| NITRATE NITROGEN | 237 |
| P₂O₅ | 105 |
| K₂O | 480 |
| CaO | 230 |
| MgO | 60 |
| MnO | 0.75 |
| B₂O₃ | 1.1 |
| Fe | 2.3 |
| Cu | 0.03 |
| Zn | 0.09 |
| Mo | 0.03 |

Thereafter, the weight of the harvested 12 lettuces was measured. The average value of the weight of the 12 lettuces (hereinafter, referred to also as a "total yield average value"), the average value of the weight of the three lettuces cultivated at an end of the lighting region of the lighting apparatus (hereinafter, referred to also as an "end-side yield average value"), and a ratio of the end-side yield average value to the total yield average value were calculated. The results are shown in the following Table 2.

**[Table 2]**

| | LOCATION NUMBER IN CULTIVATION PANEL | | HYDROPONIC CULTIVATION APPARATUS(1) | | | | COMPARISON HYDROPONIC CULTNATION APPARATUS (1) |
|---|---|---|---|---|---|---|---|
| | | | CULTIVATION 1 | CULTIVATION 2 | CULTIVATION 3 | CULTIVATION 4 | |
| WEIGHT OF LETTUCE | END SIDE | 1 | 86.5 | 67.6 | 84.5 | 85.2 | 71.0 |
| | | 2 | 81.3 | 80.8 | 96.3 | 93.8 | 75.4 |
| | | 3 | 79.2 | 80.0 | 81.3 | 66.3 | 72.3 |
| | | 4 | 84.6 | 87.8 | 82.7 | 96.0 | 76.7 |
| | | 5 | 80.9 | 90.0 | 96.4 | 70.3 | 80.0 |
| | | 6 | 72.7 | 78.5 | 97.1 | 77.0 | 90.7 |
| | | 7 | 89.6 | 89.6 | 63.0 | 99.1 | 71.0 |
| | | 8 | 88.6 | 76.9 | 87.6 | 91.9 | 87.9 |
| | | 9 | 85.9 | 80.1 | 91.2 | 81.1 | 91.4 |
| | | 10 | 79.3 | 61.5 | 91.7 | 87.7 | 88.3 |
| | | 11 | 70.7 | 85.0 | 92.7 | 84.8 | 82.3 |
| | | 12 | 92.5 | 83.0 | 90.0 | 99.7 | 80.6 |
| TOTAL YIELD AVERAGE VALUE(g) | | | 82.7 | 80.1 | 87.9 | 86.1 | 80.6 |
| END-SIDE YIELD AVERAGE VALUE(g) | | | 82.3 | 76.1 | 87.4 | 81.8 | 72.9 |
| (END-SIDE YIELD AVERAGE VALUE/TOTAL YIELD AVERAGE VALUE)(%) | | | 99.6 | 95.1 | 99.4 | 95.0 | 90.4 |

In Table 2, the "location numbers in cultivation panel" are numbers corresponding to location numbers written in the 12 lettuce seedlings S disposed in the cultivation panel 48 in FIG. 4. Columns from the "cultivation 1" to the "cultivation 4" in the section of the hydroponic cultivation apparatus (1) show the results of the four repetitions of the above cultivation.

The results shown in Table 2 revealed that a difference between the total yield average value and the end-side yield average value is reduced when the lighting apparatus (1) of the present invention is used as compared to when the comparison lighting apparatus (1) is used, and thus growth efficiency equivalent to the growth efficiency for the entire lighting region can be obtained also in the end of the lighting region of the lighting apparatus.

Therefore, it was confirmed that the plant growth lighting apparatus of the present invention receives no adverse effects from a ratio between the photosynthetic photon flux density of red light and the photosynthetic photon flux density of blue light and achieves a ratio between the photosynthetic photon flux density of red light and the photosynthetic photon flux density of blue light that is suitable for growing plants also in the end of the lighting region, thus obtaining growth efficiency equivalent to that in the central portion of the lighting region.

### REFERENCE SIGNS LIST

- 10: plant growth lighting apparatus
- 21: substrate
- 23: light-emitting element unit
- 23A: blue light-emitting element
- 23B: red light-emitting element
- 30: plant growth lighting apparatus
- 41: plant growth lighting apparatus
- 45: cultivation tank
- 45A: short side
- 45B: long side
- 48: cultivation panel
- S: lettuce seedlings

## Claims

1. A plant growth lighting apparatus comprising a plurality of light-emitting element units, each including a first light-emitting element and a second light-emitting element having an emission peak wavelength different from that of the first light-emitting element, arranged side by side along one direction to form a light-emitting element array, wherein:
the light-emitting element unit is constituted by two second light-emitting elements disposed so as to be spaced apart from each other in the one direction and one first light-emitting element disposed between the two second light-emitting elements;
a distance between first light-emitting elements of light-emitting element units adjacent to each other in two or more light-emitting element units positioned in at least one of end parts of the light-emitting element array is shorter than a distance between first light-emitting elements of light-emitting element units adjacent to each other in two or more light-emitting element units positioned in a central part of the light-emitting element array; and
a distance between two second light-emitting elements in a light-emitting element unit positioned in the end part is shorter than a distance between two second light-emitting elements in a light-emitting element unit positioned in the central part.

2. The plant growth lighting apparatus according to claim 1, wherein three or more light-emitting element units are positioned in at least one of the end parts of the light-emitting element array, and a distance between first light-emitting elements of light-emitting element units adjacent to each other in the three or more light-emitting element units decreases with increasing distance from the central part.

3. The plant growth lighting apparatus according to claim 1 or 2, wherein three or more light-emitting element units are positioned in at least one of the end parts of the light-emitting element array, and a distance between two second light-emitting elements in the three or more light-emitting element units decreases with increasing distance from the central part.

4. The plant growth lighting apparatus according to any one of claims 1 to 2, comprising a controller for individually controlling a photosynthetic photon flux density of the first light-emitting element that constitutes the light-emitting element unit and a photosynthetic photon flux density of the second light-emitting element that constitutes the light-emitting element unit.

5. A plant hydroponic cultivation apparatus employing the plant growth lighting apparatus according to any one of claims 1 to 4.

6. A plant hydroponic cultivation method in which a plant is cultivated in the plant hydroponic cultivation apparatus according to claim 5 with a distance between the plant growth lighting apparatus and the plant kept within 15 cm.
